# EUROPEAN PATENT APPLICATION

(11) **EP 3 252 496 A1**
(43) Date of publication of application: **06.12.2017**
(21) Application number: 17173330.6
(22) Date of filing: 30.05.2017
(51) Int. Cl.: G01S 7/40, G01S 13/02

(54) **RADAR DEVICE AND TRANSMISSION POWER CONTROL METHOD**

(30) Priority: 03.06.2016 JP 2016112062
(71) Applicant: Panasonic Intellectual Property Management Co., Ltd., Osaka-shi, Osaka 540-6207 (JP)
(72) Inventor: NAKAMURA, Shigeki, Osaka-shi, Osaka 540-6207 (JP)
(74) Representative: Grünecker Patent- und Rechtsanwälte PartG mbB

(57) **Abstract**

A radar device (100) includes transmission signal generation circuitry (101) that generates one or more transmission signals, a transmission amplifier (103) that amplifies a power level of the one or more transmission signals, a transmission gain controller (108) that adjusts a gain of the transmission amplifier (103), transmission antenna circuitry (107) that converts each of the one or more amplified transmission signals into each of one or more radio signals and transmit the one or more radio signals to a measurement target space, reception antenna circuitry (110) that receives the one or more radio signals from the measurement target space, and one or more receivers (109) that detect a power level of a transmission/reception leakage signal using the one or more received radio signals. The transmission gain controller (108) adjusts the gain of the transmission amplifier in accordance with a result of comparison between the detected power level and a power level of a transmission/reception leakage signal measured in advance.

## Description

### BACKGROUND

### 1. Technical Field

The present disclosure relates to a radar device and transmission power control method.

### 2. Description of the Related Art

In recent years, with advance of microfabrication techniques in complementary metal oxide semiconductor (CMOS) process, integrated circuits for millimeter-wave radars using a millimeter-wave band in, for example, 77 GHz band, are being put into practical use. The operation frequency of an integrated circuit for a millimeter-wave radar is higher compared with the operation frequency of an integrated circuit for wireless communication in a microwave band. Therefore, a high cutoff frequency in the CMOS process, that is, a current gain becomes one fold, a difference between a frequency difficult for use as an amplifier element and the operation frequency is decreased, and these frequency values become close to each other.

Thus, variations occurring in the CMOS process and a temperature change cause great fluctuations of the gain of an amplifier for high-frequency signals (radio frequency signals). For example, in wireless communication in a millimeter-wave band, antenna gain variations tend to occur, and therefore an effective isotropic radiated power (EIRP) level of an antenna in a wireless communication device tends to become fluctuated.

Therefore, a wireless communication device which uses a non-volatile memory to correct a shift in transmission power due to variations occurring in the CMOS process has been disclosed in, for example, Japanese Unexamined Patent Application Publication No. 8-265210.

### SUMMARY

However, in Japanese Unexamined Patent Application Publication No. 8-265210, correction of power of a high-frequency signal is not considered when antenna gain variations occur. Thus, in a wireless communication or radar device (for example, in a millimeter-wave band) where antenna gain variations tend to occur, it is difficult to make the EIRP level of the antenna in the wireless communication device constant.

One non-limiting and exemplary embodiment facilitates providing a radar device and a transmission power control method which make the EIRP level of the antenna constant even if antenna gain variations occur in wireless communication handling high-frequency signals.

In one general aspect, the techniques disclosed here feature a radar device including transmission signal generation circuitry that generates one or more transmission signals, a transmission amplifier that amplifies a power level of the one or more transmission signals, a transmission gain controller that adjusts a gain of the transmission amplifier, transmission antenna circuitry that converts each of the one or more amplified transmission signals into each of one or more radio signals and transmit the one or more radio signals to a measurement target space, reception antenna circuitry that receives the one or more radio signals from the measurement target space, and one or more receivers that detect a power level of a transmission/reception leakage signal using the one or more received radio signals. The transmission gain controller adjusts the gain of the transmission amplifier in accordance with a result of comparison between the detected power level and a power level of a transmission/reception leakage signal measured in advance.

It should be noted that general or specific embodiments may be implemented as a system, a method, an integrated circuit, a computer program, a storage medium, or any selective combination thereof.

According to the present disclosure, in the wireless communication using high-frequency signals, it is possible to make the EIRP level of the antenna constant even if antenna gain variations occur.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 depicts an example of structure of a radar device according to a first embodiment;
Fig. 2 is an example of results of a pulse detection process and a distance detection process at a received signal processing unit;
Fig. 3 is a flowchart for describing an operation procedure of AGC at the time of actual operation of the radar device according to the first embodiment and a second embodiment;
Fig. 4 depicts an example of structure of a radar device in the second embodiment; and
Fig. 5 depicts an example of transmission beams transmitted from a plurality of transmission antennas according to the second embodiment.

### DETAILED DESCRIPTION

In the following, embodiments of the present disclosure are described with reference to the drawings. Note that same reference characters represent a same or equivalent portion throughout the drawings.

### (First Embodiment)

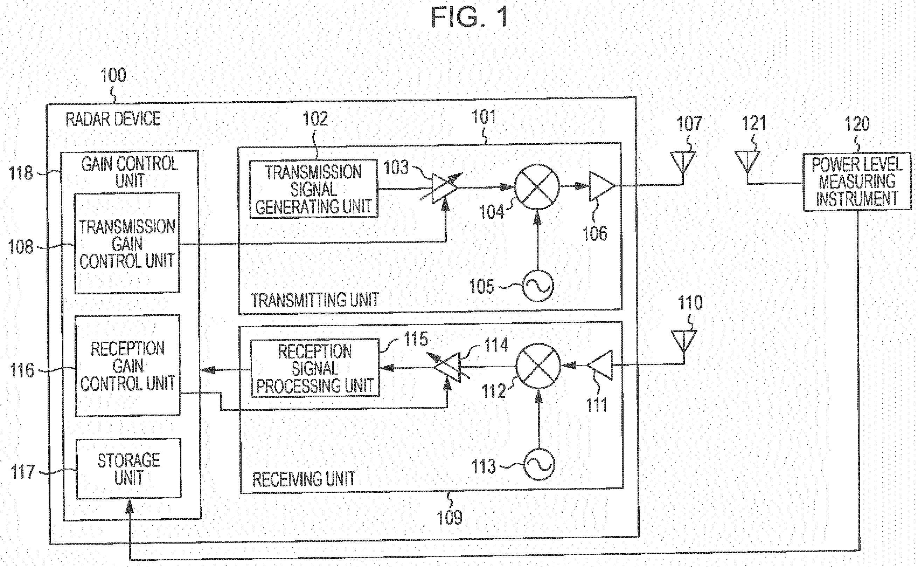

Fig. 1 depicts the structure of a radar device 100 according to a first embodiment of the present disclosure. The radar device 100 includes a transmitter unit 101, a receiver unit 109, and a gain control unit 118. The transmitter unit 101 includes a transmission signal generator unit 102 (transmission signal generation circuitry), a transmission variable gain amplifier 103, a frequency converting unit 104, a local oscillator 105, an amplifier 106, and a transmission antenna 107.

The receiver unit 109 functions as a detecting unit which receives a radio signal and detects a power level of a transmission/reception leakage signal in the received radio signal. Here, the transmission/reception leakage signal is a signal (leakage signal) among transmission signals generated by the transmitter unit 101, the signal propagating via some medium and leaking into the receiver unit 109. The medium is, for example, a substrate, a semiconductor substrate, or a medium between the transmission antenna 107 and a reception antenna 110 or between a transmitter IC and a receiver IC included in the radar device 100.

The receiver unit 109 has the reception antenna 110, an amplifier 111, a frequency converter unit 112, a local oscillator 113, a reception variable gain amplifier 114, and a received signal processing unit 115. The gain control unit 118 includes a transmission gain control unit 108, a reception gain control unit 116, and a storage unit 117.

The transmission signal generator unit 102 repeatedly generates a pulse signal (transmission pulse) having a predetermined pulse width as a transmission signal at constant time intervals for output to the transmission variable gain amplifier 103.

When a pulse signal is used as a transmission signal, a distance measurable by the radar device 100 depends on a time interval for generating a transmission pulse. That is, a time period longer than a time period from a time when the radar device 100 transmits a pulse signal toward a measurement-target object positioned at an assumed maximum detection distance until the pulse signal reflected from the measurement-target object is received by the radar device 100 is set as a time interval (transmission-pulse transmission interval) for generating a transmission pulse. Also, the transmission pulse has a pulse width related to resolution at the time of measurement. As the pulse width is shorter, a distance at which reflected waves from a plurality of measurement-target objects are separable is shorter, thereby achieving high resolution.

In the first embodiment and a second embodiment, which will be described further below, a transmission signal with a single pulse waveform having a predetermined pulse width repeated in a predetermined cycle (at transmission-pulse transmission intervals) is used. However, the transmission signal is not restricted to this as long as the transmission signal is an intermittent signal (a signal repeatedly transmitted at transmission intervals) having a predetermined signal width and signal interval in accordance with the range of the distance for detection of the measurement-target object and resolution. For example, a pulse signal including a plurality of pulse strings or a modulated signal with a pulse signal including a single or plurality of pulse strings frequency-modulated or phase-modulated may be used as a transmission signal.

The transmission variable gain amplifier 103 amplifies an inputted pulse signal in accordance with an inputted gain control signal, and inputs the amplified pulse signal to the frequency converter unit 104. The local oscillator 105 generates a local signal for modulation for use in the frequency converter unit 104.

The frequency converter unit 104 includes a mixer and so forth, and mixes the amplified pulse signal inputted from the transmission variable gain amplifier 103 and the local signal outputted from the local oscillator 105 to upconvert the pulse signal of a baseband into a radio frequency (for example, a millimeter-wave band). Next, the frequency converter unit 104 inputs the pulse signal upconverted into the radio frequency to the amplifier 106.

The amplifier 106 amplifies the pulse signal upconverted into the radio frequency to generate a transmission signal for output to the transmission antenna 107. The transmission antenna 107 transmits the inputted transmission signal to a measurement target space. When a measurement-target object is present in the measurement target space, the signal transmitted from the transmission antenna 107 is reflected from the measurement-target object.

The reception antenna 110 receives a radio signal including a signal of the reflected wave reflected from the measurement-target object for output as a received signal of the radio frequency to the amplifier 111. The disclosure is not limited to the transmission antenna 107 and the reception antenna 110 that are to be separately provided. A structure of sharing an antenna may be adopted.

The amplifier 111 amplifies the inputted received signal of the radio frequency, and outputs the amplified received signal of the radio frequency to the frequency converter unit 112.

The local oscillator 113 generates a local signal for modulation for use in the frequency converting unit 112. Note that while the present embodiment is configured so that the transmitter unit 101 and the receiver unit 109 each have an independent local oscillator, a structure may be adopted in which the transmitter unit 101 and the receiver unit 109 share one local oscillator.

The frequency converter unit 112 includes a mixer and so forth, and mixes the received signal of the radio frequency amplified by the amplifier 111 and the local signal outputted from the local oscillator 113 to down-convert the received signal of the radio frequency to a baseband. Next, the frequency converter unit 112 outputs the received signal down-converted to the baseband to the reception variable gain amplifier 114.

The reception variable gain amplifier 114 amplifies the down-converted received signal in accordance with an inputted gain control signal, and outputs the amplified received signal to the received signal processing unit 115.

The received signal processing unit 115 is an example of structure for achieving a function of detecting a measurement-target object. The received signal processing unit 115 receives an input of the received signal down-converted to the baseband. Then, on the inputted received signal, the received signal processing unit 115 performs, for example, wave detecting process, pulse detecting process, pulse power level detecting process, and process of detecting a distance to the measurement-target object, which are all known techniques and are not described herein in detail.

When a pulse of a reflected wave reflected from the measurement-target object is included in the received signal, the received signal processing unit 115 measures a time period from a time when the transmitter unit 101 transmits a transmission signal until the received signal processing unit 115 detects a pulse of a reflected wave, and calculates a distance to the measurement-target object based on the measured time period.

The reception gain control unit 116 uses, for example, a control method in which a total of thermal noise in an input unit of a receiver and inner thermal noise occurring inside the receiver is constant, to generate a gain control signal for controlling the gain of the reception variable gain amplifier 114 so that the gain of the receiver unit 109 falls within a range set in advance and to input the gain control signal to the reception variable gain amplifier 114. The control method is a known technique, and is not described herein in detail.

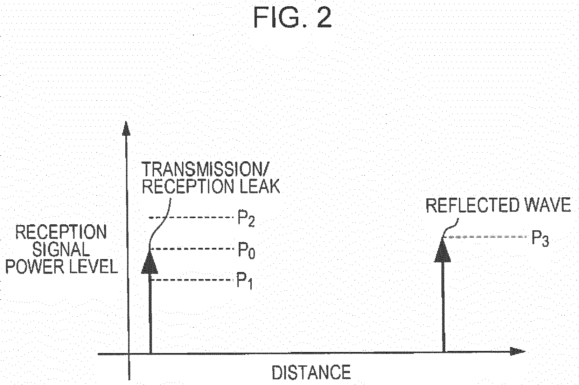

The storage unit 117 stores a power level value of transmission/reception leakage signal when the EIRP level of the transmission signal transmitted from the transmission antenna 107 is equal to or higher than a desired power level. The storage unit 117 is, for example, a non-volatile memory. In one example, as will be described further below with reference to Fig. 2, the storage unit 117 stores information (a value or a value range) about the power level value of the transmission/reception leakage signal. Also, in one example, when a plurality of desired power levels are set, the storage unit 117 stores the power level values of the transmission/reception leakage signal for the respective desired power levels as a map.

For example, on inspection at the time of factory shipment, the gain of the transmission variable gain amplifier 103 is changed, and the EIRP level transmitted from the transmission antenna 107 is measured by using a power level measuring instrument 120 including an antenna 121. Next, the received signal processing unit 115 calculates a power level of the transmission/reception leakage signal when the measured EIRP level is equal to or higher than the desired power level, and causes the calculated power level of the transmission/reception leakage signal to be stored in the storage unit 117.

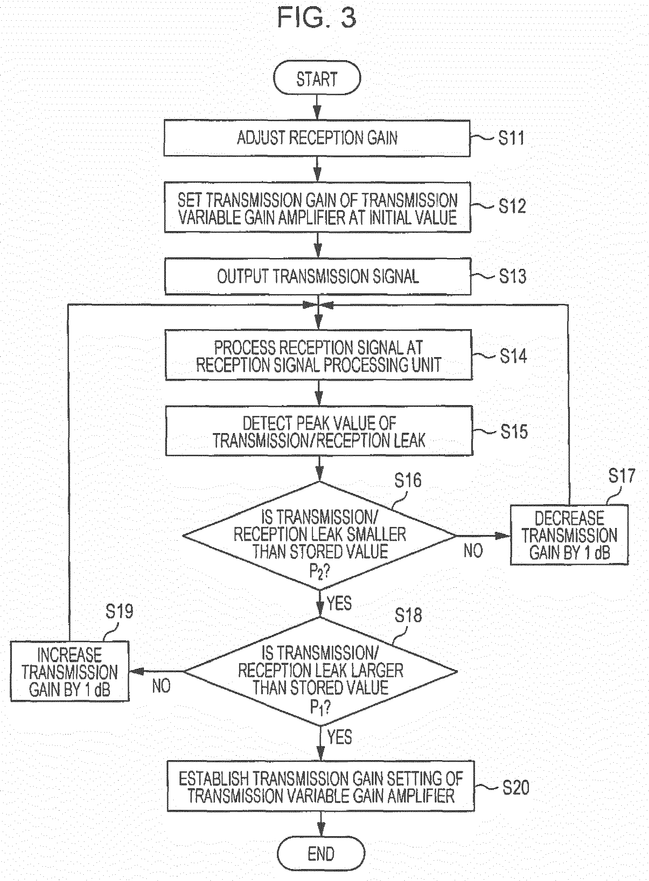

Also, in one example, the storage unit 117 stores an initial value of the gain of the transmission variable gain amplifier 103. For example, at the time of factory shipment of the radar device 100, when the measured EIRP level is equal to or higher than the desired power level, the storage unit 117 stores the gain of the transmission variable gain amplifier 103 as an initial value of the gain of the transmission variable gain amplifier 103. Then, the transmission gain control unit 108 adjusts the gain of the transmission variable gain amplifier 103 in accordance with a difference between the power level of the transmission/reception leakage signal stored in the storage unit 117 and the power level of the transmission/reception leakage signal calculated by the received signal processing unit 115. Adjustment of the gain of the transmission variable gain amplifier 103 will be described further below with reference to Fig. 3.

In one example, prior to adjusting the gain of the transmission variable gain amplifier 103, the transmission gain control unit 108 initializes the gain of the transmission variable gain amplifier 103 by using the initial value of the gain of the transmission variable gain amplifier 103 stored in the storage unit 117. Initialization of the gain can shorten the time taken to adjust the gain of the transmission variable gain amplifier 103, as will be described further below with reference to Fig. 3.

Fig. 2 depicts an example of results of a pulse detection process and a distance detection process in the received signal processing unit 115. The transmission/reception leakage signal is detected after a predetermined delay from a timing when the transmission signal is outputted. The detected distance can be regarded as zero. Then, after the transmission/reception leakage signal (power level P₀) is detected, a reflected wave (power level P₃) from the measurement-target object is detected.

When the EIRP level P₃ measured by using the power level measuring instrument 120 is equal to or higher than the desired power level and the detected power level of the transmission/reception leakage signal is P₀, in one example, the storage unit 117 stores P₁ equivalent to P₀-1 dB and P₂ equivalent to P₀+1 dB as information about the power levels of the transmission/reception leakage signal. Instead, the storage unit 117 may store P₀ as information about the power level of the transmission/reception leakage signal.

Next, a transmission power control method in the radar device 100 according to the first embodiment is described with reference to Fig. 3. Fig. 3 is a flowchart for describing an operation procedure of automatic gain control (AGC) at the time of actual operation of the radar device 100 according to the first embodiment of the present disclosure.

At step S11, the reception gain control unit 116 generates a gain control signal for controlling the gain of the reception variable gain amplifier 114 based on a difference between thermal noise of an input portion of the receiver unit 109 and inner thermal noise occurring inside the receiver unit 109 so that, for example, the gain of the reception variable gain amplifier 114 is in a desired range, and outputs the generated gain control signal to the reception variable gain amplifier 114.

Next at step S12, the transmission gain control unit 108 reads the initial value of the gain of the transmission variable gain amplifier 103 stored in the storage unit 117, generates a gain control signal for setting the gain of the transmission variable gain amplifier 103 at the initial value, and outputs the generated gain control signal to the transmission variable gain amplifier 103. Note that step S12 may be omitted in the first embodiment.

Next at step S13, the transmission antenna 107 transmits a transmission signal generated by the transmission signal generator unit 102 and amplified with the set gain by the transmission variable gain amplifier 103. Next at step S14, from a reflected wave received by the reception antenna 110 and the received signal including a transmission/reception leakage signal, the received signal processing unit 115 calculates a received signal power level and a distance.

Next at step S15, from the results calculated by the received signal processing unit 115, the transmission gain control unit 108 detects a peak value of the power level of the transmission/reception leakage signal. Next at step S16, the transmission gain control unit 108 compares the detected peak value of the power level of the transmission/reception leakage signal and the power level P₂ of the transmission/reception leakage signal stored in the storage unit 117.

When the transmission gain control unit 108 determines at step S16 that the detected peak value of the power level of the transmission/reception leakage signal is equal to or larger than the power level P₂ (NO at S16), the process proceeds to step S17, decreasing the gain setting of the transmission variable gain amplifier 103 by 1 dB. After step S17, the operation of the radar device 100 returns to step S14.

On the other hand, when the transmission gain control unit 108 determines at step S16 that the detected peak value of the power level of the transmission/reception leakage signal is smaller than the power level P₂ of the transmission/reception leakage signal (YES at S16), the process proceeds to step S18 without changing the gain setting of the transmission variable gain amplifier 103.

At step S18, the transmission gain control unit 108 compares the detected peak value of the power level of the transmission/reception leakage signal and the power level P₁ of the transmission/reception leakage signal stored in the storage unit 117. When the transmission gain control unit 108 determines at step S18 that the detected transmission/reception leakage signal is equal to or smaller than the power level P₁ (NO at S18), the process proceeds to step S19, increasing the gain setting of the transmission variable gain amplifier 103 by 1 dB. After step S19, the operation of the radar device 100 returns to step S14.

On the other hand, the transmission gain control unit 108 determines at step S18 that the detected transmission/reception leakage signal is larger than the power level P₁ of the transmission/reception leakage signal (YES at S18), the process proceeds to step S20, establishing the gain setting of the transmission variable gain amplifier 103 and ending the process.

From the above, for example, when the power level transmitted from the transmission antenna 107 on inspection at the time of factory shipment is equal to or higher than a desired power level, the radar device 100 of the first embodiment adjusts the gain of the transmission variable gain amplifier 103 by automatic gain control based on the result of comparison between the power level of the transmission/reception leakage signal and the detected transmission/reception leakage signal. With this, even if variations occurring in the CMOS process and fluctuations in conditions such as operation temperature occur, the EIRP of the radar device 100 can be kept constant.

### (Second Embodiment)

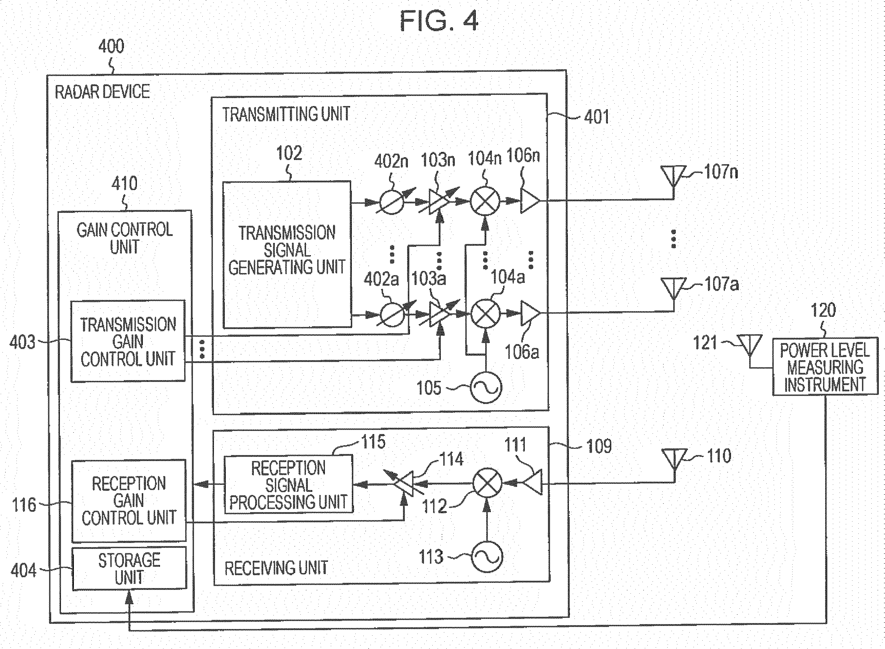

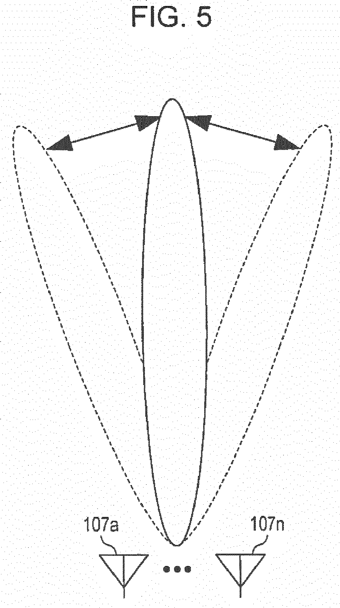

Fig. 4 depicts the structure of a radar device 400 in the second embodiment. Fig. 5 depicts an example of transmission beams transmitted from a plurality of transmission antennas 107a, .... 107n according to the second embodiment. In the second embodiment, a transmitter unit 401 is configured by using a phased array, and is a radar device configured of a plurality of transmission branches. The phased array is a known technique, and is not described herein in detail.

The radar device 400 includes the transmitter unit 401, the receiver unit 109, and a gain control unit 410. The transmitter unit 401 includes the transmission signal generator unit 102, a plurality of variable phase shifters 402a, ..., 402n, a plurality of transmission variable gain amplifiers 103a, ..., 103n, a plurality of frequency converting units 104a, ..., 104n, the local oscillator 105, a plurality of amplifiers 106a, ..., 106n, and a plurality of transmission antennas 107a, .... 107n. The receiver unit 109 includes the reception antenna 110, the amplifier 111, the frequency converter unit 112, the local oscillator 113, the reception variable gain amplifier 114, and the received signal processing unit 115. The gain control unit 410 includes a transmission gain control unit 403, the reception gain control unit 116, and a storage unit 404.

In the second embodiment, compared with the first embodiment, the plurality of variable phase shifters 402a, ..., 402n are added, and the transmission variable gain amplifier 103, the frequency converter unit 104, the amplifier 106, and the transmission antenna 107 in the transmitter unit 101 are changed as the plurality of transmission variable gain amplifiers 103a, ..., 103n, the plurality of frequency converter units 104a, ..., 104n, the plurality of amplifiers 106a, ..., 106n, and the plurality of transmission antennas 107a, .... 107n, respectively, in the transmitter unit 401. Note that components used commonly in the first embodiment and the second embodiment are provided with a same reference numeral and these components are not described herein.

The plurality of variable phase shifters 402a, ..., 402n each adjust the phase of the signal generated at the transmission signal generator unit 102 for output to each of the plurality of transmission variable gain amplifiers 103a, ..., 103n. By the plurality of variable phase shifters 402a, ..., 402n each controlling the phase of each transmission branch, as depicted in Fig. 5, the directivity of a transmission beam transmitted from each of the plurality of transmission antennas 107a, ..., 107n can be formed, that is, electronic scanning of the beams can be made.

The plurality of transmission variable gain amplifiers 103a, ..., 103n each have a function similar to that of the transmission variable gain amplifier 103. The plurality of frequency converter units 104a, ..., 104n each have a function similar to that of the frequency converter unit 104. The plurality of amplifiers 106a, ..., 106n each have a function similar to that of the amplifier 106. The plurality of transmission antennas 107a, ..., 107n are arranged in an array, and each have a function similar to that of the transmission antenna 107.

The storage unit 404 stores an initial value of a gain and a power level of a transmission/reception leakage signal of each of the plurality of transmission variable gain amplifiers 103a, ..., 103n. In one example, as with the storage unit 117, the storage unit 404 stores information about the power level of the transmission/reception leakage signal. Here, note that the transmission/reception leakage signal in the radar device 400 is a signal among transmission signals generated by the transmitter unit 401, the signal propagating through a substrate, through a semiconductor substrate, between the plurality of transmission antennas 107a, .... 107n and the reception antenna 110, between the transmission IC and a reception IC, or the like included in the radar device 400 and leaking into the receiver unit 109.

For example, on inspection at the time of factory shipment, the gain of the transmission variable gain amplifier 103a is changed, and the EIRP level transmitted from the transmission antenna 107a is measured by using the power level measuring instrument 120 including the antenna 121. Next, when the measured EIRP level is equal to or higher than a desired power level, the storage unit 404 stores the gain of the transmission variable gain amplifier 103a as an initial value of the gain of the transmission variable gain amplifier 103a.

Next, the gain of the transmission variable gain amplifier 103b is changed, and the EIRP level transmitted from the transmission antenna 107b is measured by using the power level measuring instrument 120 including the antenna 121. Then, when the measured EIRP level is equal to or higher than the desired power level, the storage unit 404 stores the gain of the transmission variable gain amplifier 103b as an initial value of the gain of the transmission variable gain amplifier 103b. As for the other transmission variable gain amplifiers 103c, ..., 103n, the storage unit 404 stores an initial value of the gain in a manner similar to that described above.

Next, the plurality of variable phase shifters 402a, ..., 402n adjust the phase of the signal generated at the transmission signal generator unit 102 so that the azimuth of a transmission beam outputted from each of the plurality of transmission antennas 107a, .... 107n is set to be a predetermined azimuth (for example, a zero-degree direction).

Then, the gain of each of the plurality of transmission variable gain amplifiers 103a, ..., 103n is changed by the same amount, and the EIRP level transmitted from each of the plurality of transmission antennas 107a, ..., 107n is measured by using the power level measuring instrument 120 including the antenna 121. Then, when the measured E1RP level is equal to or higher than a desired power level, the received signal processing unit 115 calculates a power level of a transmission/reception leakage signal, and causes the calculated power level of the transmission/reception leakage signal to be stored in the storage unit 404. Note that when the measured EIRP level is equal to or higher than the desired power level, the storage unit 404 stores the value of the phase set in each of the plurality of variable phase shifters 402a, ..., 402n, the value of the gain set in each of the plurality of transmission variable gain amplifiers 103a, ..., 103n, and the measured EIRP level so as to establish a link thereamong.

The transmission gain control unit 403 causes the plurality of variable phase shifters 402a, ..., 402n to each set an azimuth of an electron beam as an azimuth identical to the azimuth when the power level of the transmission/reception leakage signal is stored in the storage unit 404 (for example, zero-degree direction) to adjust the gain of each of the plurality of transmission variable gain amplifiers 103a, ..., 103n in accordance with a difference between the power level of the transmission/reception leakage signal stored in the storage unit 404 and the power level of the transmission/reception leakage signal calculated by the receivedsignal processing unit 115. Adjustment of the gain of each of the plurality of transmission variable gain amplifiers 103a, ..., 103n will be described further below.

Next, a transmission power control method in the radar device 400 according to the second embodiment is described by using Fig. 3 again, which is referred to in the first embodiment. At step S11, the reception gain control unit 116 generates a gain control signal for controlling the gain of the reception variable gain amplifier 114 based on a difference between thermal noise of an input portion of the receiver unit 109 and inner thermal noise occurring inside the receiver unit 109 so that, for example, the gain of the reception variable gain amplifier 114 is in a desired range, and outputs the generated gain control signal to the reception variable gain amplifier 114.

Next at step S12, the transmission gain control unit 403 reads the initial value of the gain of each of the plurality of transmission variable gain amplifiers 103a, ..., 103n stored in the storage unit 404, generates a gain control signal for setting the gain of each of the plurality of transmission variable gain amplifiers 103a, ..., 103n at the initial value of the gain, and outputs the generated gain control signal to each of the plurality of transmission variable gain amplifiers 103a, ..., 103n.

Next at step S13, the transmission signal is transmitted from each of the plurality of transmission antenna 107a, .... 107n, the transmission signal generated by the transmission signal generator unit 102, with its azimuth set by each of the plurality of variable phase shifters 402a, ..., 402n at an azimuth identical to that when the initial value of the gain is stored in the storage unit 404, and amplified with the set gain by each of the plurality of transmission variable gain amplifiers 103a, ..., 103n.

Next at step S14, from a reflected wave received by the reception antenna 110 and the received signal including a transmission/reception leakage signal, the received signal processing unit 115 calculates a received signal power level and a distance. Next at step S15, from the results calculated by the received signal processing unit 115, the transmission gain control unit 403 detects a peak value of the power level of the transmission/reception leakage signal.

Next at step S16, the transmission gain control unit 403 compares the detected peak value of the power level of the transmission/reception leakage signal and the power level P₂ of the transmission/reception leakage signal stored in the storage unit 404. When the transmission gain control unit 403 determines at step S16 that the detected peak value of the power level of the transmission/reception leakage signal is equal to or larger than the power level P₂ (NO at S16), the process proceeds to step S17, decreasing the gain setting of each of the plurality of transmission variable gain amplifiers 103a, ..., 103n by 1 dB. After step S17, the operation of the radar device 400 returns to step S14.

On the other hand, when the transmission gain control unit 403 determines at step S16 that the detected peak value of the power level of the transmission/reception leakage signal is smaller than the power level P₂ of the transmission/reception leakage signal (YES at S16), the process proceeds to step S18 without changing the gain setting of each of the plurality of transmission variable gain amplifiers 103a, ..., 103n.

At step S18, the transmission gain control unit 403 compares the detected peak value of the power level of the transmission/reception leakage signal and the power level P₁ of the transmission/reception leakage signal stored in the storage unit 117. When the transmission gain control unit 403 determines at step S18 that the detected transmission/reception leakage signal is equal to or smaller than the power level P₁ of the transmission/reception leakage signal (NO at S18), the process proceeds to step S19, increasing the gain setting of the plurality of transmission variable gain amplifiers 103a, ..., 103n by 1 dB. After step S19, the operation of the radar device 400 returns to step S14.

On the other hand, the transmission gain control unit 403 determines at step S18 that the detected transmission/reception leakage signal is larger than the power level P₁ of the transmission/reception leakage signal (YES at S18), the process proceeds to step S20, establishing the gain setting of each of the plurality of transmission variable gain amplifiers 103a, ..., 103n and ending the process.

From the above, for example, based on the power level of the transmission/reception leakage signal occurring when the EIRP level transmitted from each of the plurality of transmission antennas 107a, .... 107n on inspection at the time of factory shipment is equal to or higher than a desired power level and the initial value of the gain of each of the plurality of transmission variable gain amplifiers 103a, ..., 103n, the radar device 400 of the second embodiment adjusts the gain of each of the plurality of transmission variable gain amplifiers 103a, ..., 103n by automatic gain control.

With this, even if variations occurring in the CMOS process and fluctuations in conditions such as operation temperature occur, the EIRP of the radar device 400 can be kept constant. Furthermore, in a structure including a plurality of branches such as a phased array, it is possible to inhibit fluctuations of directional transmission beams due to variations occurring in the CMOS process.

While various embodiments have been described with reference to the drawings, it goes without saying that the present disclosure is not restricted to the examples described herein. It is obvious for a person skilled in the art that various modification examples or corrected examples can be made within the range described in the claims and it is understood that these examples also naturally belong to the technical range of the present disclosure.

Note that the range of the power level of the transmission signal used in the first and second embodiments is merely an example and does not restrict the range of the power level. Similarly, the amount of adjustment of the transmission gain in the first and second embodiments is also merely an example, and does not restrict the amount of adjustment of the transmission gain.

While it has been described in the first and second embodiments that the reception antenna 110 of the receiver unit 109 is configured of one antenna, the reception antenna 110 is not restricted to this. For example, a plurality of array antennas arranged in an array may be used and, for example, a structure using a beam forming method may be adopted.

Also, while the pulse scheme is used as a radar scheme of the radar device in the first and second embodiments, the radar scheme of the radar device is not restricted to this.

Note that while a radar device is taken as an example for description in the first and second embodiments, the present disclosure is not restricted to the field of radars, and the present disclosure is an effective technique also in the field of wireless communications, for example, WiGig and so forth.

The radar device and transmission power control method according to the present disclosure are used for making an EIRP level of an antenna in a radar device using high-frequency signals (radio frequency signals) constant even if antenna gain variations occur.

## Claims

1. A radar device comprising:
transmission signal generation circuitry that generates one or more transmission signals;
a transmission amplifier that amplifies a power level of the one or more transmission signals;
a transmission gain controller that adjusts a gain of the transmission amplifier;
transmission antenna circuitry that converts each of the one or more amplified transmission signals into each of one or more radio signals and transmit the one or more radio signals to a measurement target space;
reception antenna circuitry that receives the one or more radio signals from the measurement target space; and
one or more receivers that detect a power level of a transmission/reception leakage signal by using the one or more received radio signals, wherein
the transmission gain controller that adjusts the gain of the transmission amplifier in accordance with a result of comparison between the detected power level of the transmission/reception leakage signal and a power level of a transmission/reception leakage signal measured in advance.

2. The radar device according to Claim 1, wherein
the transmission antenna circuitry includes a plurality of antennas arranged in an array,
the radar device includes a plurality of phase shifters, each of the plurality of phase shifters corresponding to each of the plurality of antennas, and
the plurality of phase shifters each adjust a phase of the corresponding one of the transmission signals,.

3. The radar device according to Claim 1, wherein
the reception antenna circuitry includes a plurality of antennas arranged in an array, and
the one or more radio signals transmitted from the transmission antenna circuitry are received by the reception antenna circuitry

4. The radar device according to Claim 1, comprising:
a storage which stores the power level of the transmission/reception leakage signal measured in advance.

5. The radar device according to Claim 1, wherein
the power level of the transmission/reception leakage signal measured in advance is the power level detected by the one or more receivers when the power level of the radio signal transmitted from the transmission antenna circuitry is equal to or higher than a desired power level.

6. A transmission power control method comprising:
generating one or more transmission signals;
amplifying, in a transmission amplifier, a power level of the one or more transmission signals;
converting each of the one or more amplified transmission signals into each of one or more radio signals;
transmitting the one or more radio signals to a measurement target space;
receiving the one or more radio signals from the measurement target space; and
detecting a power level of a transmission/reception leakage signal by using the one or more received radio signals, wherein
adjusting a gain of the transmission amplifier in accordance with a result of comparison between the detected power level of the transmission/reception leakage signal and a power level of a transmission/reception leakage signal measured in advance.
